# EUROPÄISCHE PATENTSCHRIFT

(11) **EP 1 634 014 B1**
(45) Veröffentlichungstag und Bekanntmachung des Hinweises auf die Patenterteilung: **28.12.2011**
(21) Anmeldenummer: 04733804.1
(22) Anmeldetag: 19.05.2004
(51) Int. Cl.: F16N 29/02, G01N 27/22, G01N 21/59

(54) **VERFAHREN ZUR ÜBERWACHUNG EINER ÖL-UND LUFTSCHMIEREINRCHTUNG MIT HILFE EINES SCHLIERENSENSORS**
METHOD FOR MONITORING AN OIL AND GAS LUBRICATING DEVICE WITH THE AID OF A STRIAE SENSOR
PROCEDE DE SURVEILLANCE D'UN DISPOSITIF DE LUBRIFICATION A L'HUILE ET PAR AIR A L'AIDE D'UN CAPTEUR STRIOSCOPIQUE

(30) Priorität: 16.06.2003 DE 10327329
(43) Veröffentlichungstag der Anmeldung: 15.03.2006
(73) Patentinhaber: SKF Lubrication Systems Germany AG, 12277 Berlin (DE)
(72) Erfinder: SPIESS, Götz, 14089 Berlin (DE)
(74) Vertreter: Grünecker, Kinkeldey, Stockmair & Schwanhäusser
(86) Internationale Anmeldenummer: PCT/EP2004/005427
(87) Internationale Veröffentlichungsnummer: WO 2004/113785

(56) Entgegenhaltungen:
- WO-A-01/36861
- DE-A- 2 054 822
- US-A- 5 461 236
- US-A- 6 131 471
- PATENT ABSTRACTS OF JAPAN Bd. 015, Nr. 032 (M-1073), 25. Januar 1991 (1991-01-25) & JP 02 271197 A (NIPPON SEIKO KK), 6. November 1990 (1990-11-06)

## Beschreibung

Die Erfindung betrifft ein Verfahren zum Überwachen einer Öl- und Luftschmiereinrichtung, mit der ein Ölfilm unter Schlierenbildung durch einen Luftstrom entlang einer Wandung einer Zuführleitung zu einer Schmierstelle förderbar ist, bei dem die zeitliche Änderung der Schlieren durch einen Schlierensensor erfasst und ein für die zeitliche Änderung der Schlieren repräsentatives Schlierensignal erzeugt wird.

Öl- und Luftschmiereinnchtungen sind weit verbreitet und werden beispielsweise zur Schmiermittelversorgung von Hochgeschwindigkeitsspindeln in modernen Werkzeugmaschinen eingesetzt. Ein unbemerkter Ausfall der Schmiermittelversorgung kann zu einem Ausfall der zu schmierenden Einrichtung, z.B. einer Werkzeugmaschine, und damit zu hohen Folgekosten und Problemen, wie z.B. einem Produktionsausfall, führen Damit wird der Bedarf für eine automatische Überwachungsmöglichkeit der Schmiermittelversorgung durch eine Öl- und Luftschmiereinrichtung klar, denn eine subjektive optische Überwachung beispielsweise durch einen Bediener ist zu unsicher. Die üblichen Öl- und Luftschmiereinrichtungen sind Minimalmengenschmierungen, bei denen das Öl nicht in Strömen fließt, sondern nur in der Größenordnung einzelner Tropfen. Diese Tropfen werden durch einen Luftstrom auseinander gezogen und in Form von einem feinen Ölfilm, auch Schlieren genannt, entlang einer Wandung einer Zuführleitung in Richtung einer Schmierstelle, z.B. einer Spindellagerung, befördert. Eine derart geringe Ölmenge erschwert die mit vertretbarem Aufwand durchführbare Überwachung der Schmiermittelversorgung durch die Öl- und Luftschmiereinrichtung.

Die US 6,131,471 beschreibt eine Kühlanlage mit einem Kompressor, dessen Lagerungen von einer Ölschmiereinrichtung geschmiert werden. In einer Zuführleitung der Ölschmiereinrichtung ist ein optischer Schmierstoffsensor zur Überwachung einer ausreichenden Schmiermittelversorgung angeordnet.

Aus der DE 44 39 380 A1 ist eine Schmiereinrichtung zur Minimalmengenschmierung bekannt, bei der ein Sensor den Schmiermittelstrom überwacht und eine zeitliche Änderung des Schmiermittelstroms erfasst. Der Sensor kann beispielsweise eine Lichtschranke sein, deren Erfassungsstrahl den Schmiermittelstrom und dessen transparent ausgeführte Zuführleitung diametral durchdringt und durch den Schmiermittelstrom charakteristisch verändert wird. Ein Lichtempfänger erzeugt ein für den Schmiermittelstrom oder die Schlieren repräsentatives, elektrisches Schlierensignal, von dem das Vorhandensein und die Menge des Schmiermittelstroms ableitbar ist.

Ein weiteres Beispiel für ein Verfahren zur Überwachung einer Öl- und Luftschmiereinrichtung aus dem Stand der Technik ist in der WO 01/36861 beschrieben. Auch bei dem in dieser Druckschrift beschriebenen Verfahren wird die zeitliche Änderung des Schmiermittelstroms durch einen Schlierensensor erfasst und wird von dem Schlierensensor ein den Schwankungen des Schmiermittelstroms entsprechendes elektrisches Schlierensignal ausgegeben.

Nachteilig bei der Überwachung einer Öl- und Luftschmiereinrichtung durch die in der DE 44 39 380 A1 und der WO 01/36861 beschriebenen Verfahren ist die Fehlerhaftigkeit des Schlierensignals durch starke, nicht repräsentative Schwankungen und Spitzen. Hierdurch wird die Aussagekraft des Schlierensignals herabgesetzt, da ein kurzzeitig geringes Schlierensignal nicht ungewöhnlich ist und auch nicht unbedingt mit einem Fehler der Öl- und Luftschmiereinrichtung verbunden sein muss. Eine Gefahr besteht darin, dass eine Fehlfunktion der Öl- und Luftschmiereinrichtung nicht schnell genug erkannt wird, da das geringe Schlierensignal nicht genügend beachtet wird. Auf der anderen Seite kann es auch dazu kommen, dass die geschmierte Anlage aufgrund des kurzzeitig angezeigten, geringen Schlierensignals fälschlicherweise abgeschaltet wird, obwohl die Öl- und Luftschmiereinrichtung in Ordnung arbeitet. In beiden Fällen werden unnötige Kosten verursacht. Die Nutzbarkeit des Schlierensignals ist demnach durch seine Fehlerhaftigkeit erheblich reduziert.

Des Weiteren ist ein automatisches Bewerten des Schlierensignals schlecht möglich, da die Festlegung eines vorbestimmten Grenzwertes durch die Fehler in dem Schlierensignal erschwert wird.

Daher liegt der Erfindung die Aufgabe zugrunde, die bekannten Verfahren zur Überwachung einer Öl- und Luftschmiereinrichtung weiterzuentwickeln, um Fehler bei der Bewertung des Schlierensignals zu vermeiden.

Diese Aufgabe wird durch das eingangs genannte Verfahren erfindungsgemäß dadurch gelöst, dass das Schlierensignal durch das Berechnen eines Schlierensignalmittelwertes über ein vorbestimmtes Mittelungsintervall geglättet wird, und dass das geglättete Schlierensignal als ein Betriebs- und/oder Warngrenzwert, der für einen zur betriebsgerechten Schmierung der Schmierstelle ausreichenden bzw. nicht ausreichenden Ölfilm repräsentativ ist, in Abhängigkeit von einem Normierungssignal bei Anliegen des Normierungssignals festgelegt wird.

Der Vorteil dieses Verfahrens liegt darin, dass das Schlierensignal durch das Glätten auf einfache Weise von Fehlern befreit wird. Folglich ist sichergestellt, dass, wenn das Schlierensignal einen bestimmten Wert annimmt, es sich nicht um eine kurzfristige, fehlerhafte Schwankung handelt.

Die Festlegung des Betriebs- und/oder Warngrenzwertes geschieht in Abhängigkeit von dem Normierungssignal. Das Normierungssignal kann möglicherweise bei Druck einer bestimmten Tastenkombination an der Tastatur einer angeschlossenen Maschinensteuerung erzeugt werden, zu einem Betriebszeitpunkt betriebsgerechter bzw. nicht betriebsgerechter Schmierung. Dies hat den Vorteil, dass die Einstellung der Grenzwerte sehr einfach und zeitsparend vollzogen werden kann. Beispielsweise kann ein Schlierensignal eingestellt werden, das für einen zur betriebsgerechten Schmierung der Schmierstelle ausreichenden Ölfilm repräsentativ ist und dieses Schlierensignal kann dann als Betriebsgrenzwert abgespeichert werden.

Das erfindungsgemäße Verfahren kann durch eine Reihe von vorteilhaften, voneinander unabhängigen Ausgestaltungen weiter entwickelt werden. Auf diese Ausgestaltungen und die mit diesen Ausgestaltungen jeweils verbundenen Vorteile wird im Folgenden kurz eingegangen.

Das geglättete Schlierensignal kann gemäß einer vorteilhaften Ausgestaltung mit einem vorbestimmten Betriebsgrenzwert verglichen werden, der für einen zur betriebsgerechten Schmierung ausreichenden Ölfilm repräsentativ ist. Bei Überschreiten des Betriebsgrenzwertes durch das geglättete Schlierensignal wird ein Betriebssignal ausgegeben. Durch das Betriebssignal wird die betriebsgerechte Schmierung der Schmierstelle signalisiert. Dabei bedeutet die betriebsgerechte Schmierung, dass die Schmierstelle mit einer für den einsatzgemäßen Betrieb ausreichenden Ölmenge versorgt ist. Bei einem Wälzlager bedeutet dies beispielsweise, dass die zur Erreichung der garantierten Lebensdauer nötige Ölmenge, die bei der Konstruktion des Wälzlagers berechnet wurde, dem Wälzlager zugeführt wird. Dies ist besonders vorteilhaft, da das Betriebssignal auch für eine automatische Auswertung, z.B. von einer Maschinensteuerung, genutzt werden kann. Bei Unterschreiten des Betriebsgrenzwertes durch das geglättete Schlierensignal kann ferner ein Warnsignal ausgegeben werden, das nicht betriebsgerechte Schmierung der Schmierstelle signalisiert. Das Warnsignal kann ebenfalls automatisch ausgewertet werden und beispielsweise zur Abschaltung der zu schmierenden Einrichtung führen.

Ferner kann das geglättete Schlierensignal in einer vorteilhaften Weiterbildung mit einem vorbestimmten Warngrenzwert verglichen werden, der für einen zur betriebsgerechten Schmierung der Schmierstelle nicht ausreichenden Ölfilm repräsentativ ist. Bei einem Unterschreiten des Warngrenzwertes durch das geglättete Schlierensignal wird das Warnsignal ausgegeben. Bewegt sich das geglättete Schlierensignal zwischen dem Warngrenzwert und dem Betriebsgrenzwert, erfolgt kein Signalwechsel und das Betriebssignal bzw. das Warnsignal werden weiterhin ausgegeben. Dies hat den Vorteil, dass die Zuverlässigkeit des Betriebs- bzw. Warnsignals verbessert wird, da ein geringfügiges Unterschreiten des Betriebsgrenzwertes noch keine Zurücknahme des Betriebssignals zur Folge hat. Erst wenn das geglättete Schlierensignal auch den Warngrenzwert unterschreitet, erfolgt die Ausgabe des Warnsignals und damit die Zurücknahme des Betriebssignals. Hierdurch wird ein stabiles Betriebsverhalten bei der Überwachung der Öl- und Luftschmiereinrichtung erreicht.

Der Betriebs- bzw. Warngrenzwert kann in einer vorteilhaften Ausführungsform aus einer Speichereinheit ausgelesen werden.

In einer weiteren vorteilhaften Ausgestaltung kann die Festlegung des Betriebs- oder Warngrenzwertes als prozentuale oder absolute Abweichung des jeweils anderen Grenzwertes, der bereits festgelegt ist, erfolgen. Dies hat den Vorteil, dass nur einer der beiden Grenzwerte durch ein eingestelltes Schlierensignals festgelegt werden muss, da beispielsweise die Einstellung eines für den Warngrenzwert repräsentativen Schlierensignals schwierig sein kann. Des Weiteren ist die Eingabe des einen Grenzwertes als Abweichung zu dem jeweils anderen Grenzwert schneller, was die nötige Einrichtzeit der Öl- und Luftschmiereinrichtung verkürzt.

In einer weiteren Ausgestaltung kann das Mittelungsintervall bei Ausgabe des Warnsignals automatisch verkleinert werden, wobei ein Langzeitintervall und ein Kurzzeitintervall festgelegt werden können. Dies hat besonders vorteilhafte Auswirkungen für die Ausführung des erfindungsgemäßen Verfahrens. Wenn beispielsweise während der Ausgabe des Betriebssignals das ungeglättete Schlierensignal plötzlich unterhalb des Wam grenzwertes sinkt, wird erst nach Ablauf des Langzeitintervalls das Warnsignal ausgegeben. Hierdurch stellt sich in der Praxis ein zuverlässiger und stabiler Betriebszustand ein, da das Warnsignal nur dann ausgegeben wird, wenn im Mittel des Langzeitintervalls kein Schlierensignal vorliegt. Das Langzeitintervall ist nur so lang gewählt, dass ein Betrieb ohne Schmierung über den Zeitraum des Langzeitintervalls unbedenklich ist. Auf der anderen Seite ist bei Ausgabe des Warnsignals eine schnelle Reaktion auf eine wieder ausreichende Ölfilmdicke erwünscht, weil damit z.B. die Produktion wieder gestartet wird. Deshalb wird während der Ausgabe des Warnsignals das Kurzzeitintervall als Mittelungsintervall für die Berechnung des Schlierensignalmittelwertes gewählt.

In einer vorteilhaften Weiterbildung kann das für die zeitliche Änderung der Schlieren repräsentative Schlierensignal auf optoelektronischem Wege erzeugt werden, was den Vorteil hat, dass ein optoelektronischer Sensor, wie z.B. ein Lichtempfänger, robust und kostengünstig ist.

In einer weiteren vorteilhaften Ausgestaltung kann die Temperatur des Ölfilms gemessen werden und die Temperatur des Ölfilms bei der Festlegung des Ölfilm- und Warngrenzwertes gespeichert werden. In Abhängigkeit von der Temperaturdifferenz zwischen der gespeicherten und der gemessenen Temperatur des Ölfilms wird das Schlierensignal geglättet. Hierzu können temperaturabhängige Kennwerte während des Glättens vom Schlierensignal abgezogen oder zum Schlierensignal addiert werden. Weiterhin ist denkbar, dass das Schlierensignal mit einem temperaturabhängigen Faktor zur Korrektur multipliziert wird. Diese Ausgestaltungen haben den Vorteil, dass ein durch Temperatureinflüsse auf den Ölfilm verändertes Schlierensignal kompensiert werden kann. Beispielsweise verändert sich die Viskosität des Öls mit unterschiedlicher Temperatur, was zu einer Änderung des Schlierensignals führt. Die Änderung des Schlierensignals hängt aber in diesem Fall nicht mit einer veränderten Ölfilmmenge zusammen, was normalerweise geschlussfolgert würde. Durch die Glättung des Schlierensignals durch vorbestimmte, temperaturabhängige Kennwerte wird das Schlierensignal derart verändert, dass der Temperatureinfluss auf den Ölfilm kompensiert wird.

In einer weiteren Ausgestaltung kann das Schlierensignal während des Glättens mit einem vorbestimmten Ausfallgrenzwert, der für ein Schlierensignal bei einem Ausfall des Luftstroms repräsentativ ist, verglichen werden. Bei einem Unterschreiten des Ausfallgrenzwertes durch das ungeglättete Schlierensignal wird das Warnsignal ausgegeben. Dies hat den Vorteil, dass ein Ausfall des Luftstroms und damit der Öl- und Luftschmiereinrichtung schnell erkannt wird und zur Ausgabe des Warnsignals führt. Ohne diese Ausgestaltung würde das Warnsignals erst zu einem späteren Zeitpunkt durch den Ausfall des Luftstroms ausgeben werden, bedingt durch das Mittelungsintervall beim Glätten des Schlierensignals. Durch die Ausgabe des Warnsignals wird neben der Warnung zusätzlich auf einen wiedereinsetzenden Ölfilm, bedingt durch das mit Ausgabe des Warnsignals automatisch verkleinerte Mittelungsintervall, schnell reagiert.

In einer weiteren vorteilhaften Ausgestaltung kann das Schlierensignal vor dem Glätten durch Berechnung eines Mittelwertes des Schlierensignals über ein vorbestimmtes Zeitintervall vorkonditioniert werden. Diese Vorkonditionierung hat den Vorteil, dass das Schlierensignal von ersten Fehlern befreit wird.

Des Weiteren kann das Schlierensignal in einer vorteilhaften Weiterbildung durch Entfernen des Gleichanteils aus dem Schlierensignal vorkonditioniert werden. Dies hat den Vorteil, dass Anteile des Schlierensignals, die immer gleich sind und für die zeitliche Änderung der Schlieren nicht repräsentativ sind, aus dem Schlierensignal entfernt werden. Das Entfernen des Gleichanteils kann beispielsweise durch das Subtrahieren eines Mittelwertes, berechnet über ein vorbestimmtes Zeitintervall, von dem Schlierensignal geschehen. Durch das Entfernen des Gleichanteils werden Offsetfehler, die das Schlierensignal verfälschen, kompensiert.

Das ungeglättete Schlierensignal kann in einer weiteren vorteilhaften Ausführungsform während der Vorkonditionierung gleichgerichtet werden. Hierbei werden negative Werte des Schlierensignals zu positiven geändert, wobei der Betrag des Schlierensignals unverändert bleibt. Dadurch, dass das Schlierensignal nach dem Gleichrichten zu jedem Zeitpunkt positiv ist, werden nachfolgende Schlierensignalbewertungen vereinfacht. Durch die Gleichrichtung während der Vorkonditionierung bleibt das Schlierensignal weiterhin repräsentativ, da für die Bewertung des Schlierensignals nicht das Vorzeichen, sondern nur der Betrag ausschlaggebend ist.

In einer weiteren vorteilhaften Ausgestaltung kann das Schlierensignal in Abhängigkeit von dem vorkonditionierten Schlierensignal auf einen mittleren vorbestimmten Rohsignalwert verstärkt werden. Dies hat den Vorteil, dass sich das auf den Rohsignalwert verstärkte Schlierensignal besonders gut weiterverarbeiten lässt. Beispielsweise kann der Rohsignalwert ein mittlerer Eingangsbereichswert einer Digitalisierung des Schlierensignals sein. Das Schlierensignal kann in diesem Beispiel auf den mittlerer Eingangsbereichswert geregelt werden, wobei das vorkonditionierte Schlierensignal eine Regelgröße sein kann.

Ferner kann die Verstärkung des Rohsignalwertes durch Dämpfen bzw. Abschwächen des vorkonditionierten Schlierensignals kompensiert werden. Hierdurch wird die zuvor durchgeführte Verstärkung des Schlierensignals durch Dämpfen bzw. Abschwächen mit gleichem Verstärkungsfaktor kompensiert und das Schlierensignal bleibt unverfälscht. Dämpfen bzw. Abschwächen ist ein Dividieren mit einem Verstärkungs- bzw. Dämpfungsfaktor, Verstärken ein Multiplizieren. Es ist ebenfalls denkbar, dass die vorangegangene Verstärkung mit einem Verstärkungsfaktor von < 1 durchgeführt wurde, was einer Dämpfung gleichkommt. Die hier beschriebene kompensierende Dämpfung bedeutet in diesem Fall ein Dividieren durch den Verstärkungsfaktor von < 1, was einer Verstärkung gleicht. In jedem Fall wird eine Kompensation der vorangegangenen Signaländerung erreicht.

In einer weiteren vorteilhaften Ausgestaltung kann ein durch die Schlieren gerichteter Lichtstrahl durch den Schlierensensor erfasst werden und in Abhängigkeit des Lichtstrahls das Schlierensignal erzeugt werden. Dies hat den Vorteil, dass die Schlieren den Lichtstrahl, der durch sie hindurchgeleitet wird, repräsentativ verändern. Der Schlierensensor kann z.B. ein Lichtempfänger sein. Lichtempfänger sind kostengünstige Sensoren, die auch unter Produktionsbedingungen zuverlässig arbeiten. Um den Lichtstrahl durch die Schlieren richten zu können, kann die Zuführleitung der Öl- und Luftschmiereinrichtung beispielsweise als ein transparentes Glasrohr ausgeführt sein. Dies ist besonders vorteilhaft, da das Glasrohr nicht durch das Öl angegriffen wird und dauerhaft eine gleichbleibende Transparenz behält.

Des Weiteren kann der durch die Schlieren gerichtete Lichtstrahl mit einer Lichtquelle erzeugt werden.

In einer vorteilhaften Weiterbildung kann das Schlierensignal durch Regeln der Lichtintensität der Lichtquelle kalibriert werden. Hierdurch kann beispielsweise eine Arbeitspunkteinstellung des Schlierensensors vorgenommen werden.

Ferner kann das Schlierensignal durch Regeln der Lichtintensität der Lichtquelle auf eine vorbestimmte Prüfintensität kalibriert werden. Hierdurch können die verschiedenen Verfahrensschritte überprüft und eingestellt werden. Beispielsweise kann die Prüfintensität eine vorbestimmte, harmonisch schwingende Intensität sein, die sich in dem Schlierensignal auf vorbestimmte Art und Weise abzeichnen muss.

In einer weiteren vorteilhaften Ausgestaltung kann das Schlierensignal vor der Vorkonditionierung mit einem Filter gefiltert werden. Dies hat den Vorteil, dass das Schlierensignal von fehlerhaften Störsignalen befreit wird, die die Auswertung des Schlierensignals erschweren. Beispielsweise kann für die Filterung ein Tiefpassfilter eingesetzt werden, bei dem nur Signale unterhalb einer vorbestimmten Frequenz durchgelassen werden.

Die Erfindung betrifft neben dem oben erläuterten Verfahren und seinen weiteren Ausgestaltungen auch eine Überwachungsvorrichtung für eine Öl- und Luftschmiereinrichtung mit einem Schlierensensor, mit dem die zeitliche Änderung der Schlieren erfassbar und ein für die zeitliche Änderung der Schlieren repräsentatives Schlierensignal erzeugbar ist. Um bei einer solchen Überwachungsvorrichtung die Fehlerhaftigkeit des Schlierensignals zu verringern, ist eine Glättungseinheit vorgesehen, durch die das Schlierensignal durch Berechnung eines Mittelwertes des Schlierensignals über ein vorbestimmtes Mittelungsintervall glättbar ist, und durch eine Speichereinheit, aus der im Betrieb ein Betriebs- und/oder Warngrenzwert auslesbar ist, das beim Anliegen eines Normierungssignals veränderbar abspeicherbar ist.

Die Überwachungsvorrichtung kann ferner eine Speichereinheit umfassen, aus der im Betrieb ein veränderbar abspeicherbarer Betriebs- und/oder Warngrenzwert auslesbar ist.

Im Folgenden wir die Erfindung beispielhaft anhand einer Ausführungsform mit Bezug auf die beigefügten Zeichnungen erläutert. Dabei können, entsprechend den oben beschriebenen, jeweils für sich als vorteilhaft zu betrachtenden Ausgestaltungen, einzelne Merkmale der beschriebenen Ausführungsform weggelassen und/oder beliebig miteinander kombiniert werden.

Es zeigen:
- Fig. 1: eine schematische Darstellung einer Öl- und Luftschmiereinrichtung, bei der das erfindungsgemäße Verfahren eingesetzt werden kann;
- Fig. 2: eine schematische Darstellung einer beispielhaften Zuführleitung der Öl- und Luftschmiereinrichtung, bei der das erfindungsgemäße Verfahren eingesetzt werden kann, mit einem Schlierensensor und einer Lichtquelle in beispielhafter Darstellung;
- Fig. 3: eine schematische Darstellung einer Ausführungsform einer erfindungsgemäßen Auswerteeinheit;
- Fig. 4: eine schematische Darstellung einer erfindungsgemäßen Signalaufbereitungseinheit;
- Fig. 5: eine schematische Darstellung einer erfindungsgemäßen Signalausgabe;
- Fig. 6: eine schematische Darstellung der Signalverläufe bei einem Ausfall der Druckluft.

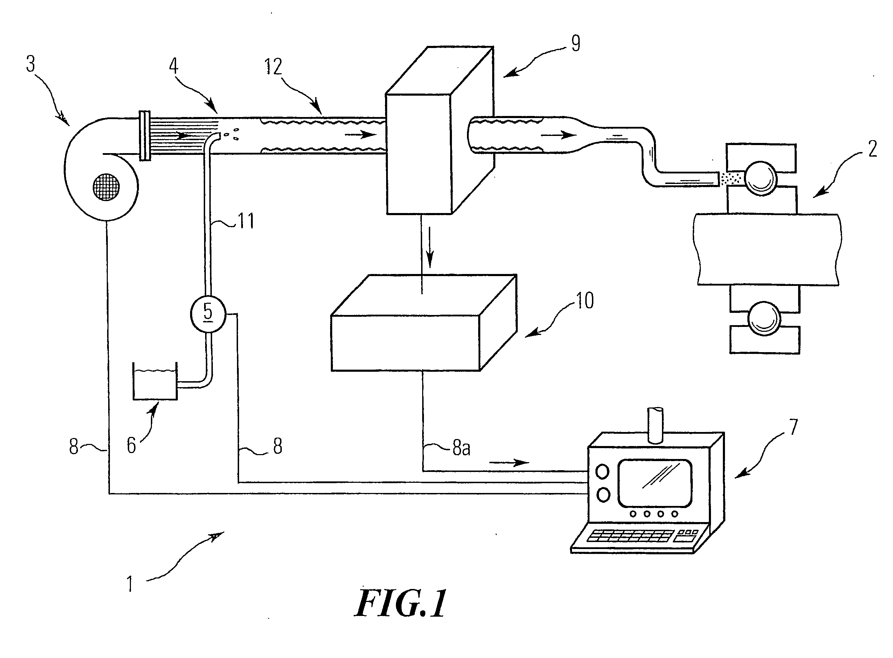

Fig. 1 zeigt eine Öl- und Luftschmiereinrichtung 1, bei der das erfindungsgemäße Verfahren angewendet wird und durch die eine Schmierstelle 2 geschmiert wird. Die Schmierstelle 2 ist beispielhaft als eine Spindellagerung, z.B. einer Werkzeugmaschine, dargestellt.

Die in Fig. 1 beispielhaft dargestellte Öl- und Luftschmiereinrichtung 1 enthält eine Kompressoreinheit 3, die einen Luftstrom in einer Zuführleitung 4 erzeugt, eine Ölpumpe 5, die Öl aus einem Öltank 6 in die Zuführleitung 4 pumpt, eine Steuereinheit 7, die die Ölund Luftschmiereinrichtung 1 steuert und durch Signalleitungen 8 mit den beschriebenen Einheiten verbunden ist, eine Sensoreinheit 9 und eine Auswerteeinheit 10, mit denen das erfindungsgemäße Verfahren angewendet wird.

Öl wird aus dem Öltank 6 durch die Ölpumpe 5 durch eine Ölleitung 11 in die Zuführleitung 4 gefördert. Durch den durch die Kompressoreinheit 3 erzeugten Luftstrom, wird Öl von der Öffnung der Ölleitung 11 mitgerissen und in Form von Schlieren 12, d.h. einem Ölfilm mit sich zeitlich ändernder Dicke, entlang einer Wandung der Zuführleitung 4 in Richtung der Schmierstelle 2 gefördert. Die Sensoreinheit 9, die in Fig. 1 beispielhaft um die Zuführleitung 4 herum angeordnet ist, und die Auswerteeinheit 10 dienen der Überwachung der Öl- und Luftschmiereinrichtung 1 mit Hilfe des erfindungsgemäßen Verfahrens. Durch die Signalleitung 8a ist die Auswerteeinheit 10 mit der Steuereinheit 7 verbunden. Die Steuereinheit 7 erhält von der Auswerteeinheit 10 über die Signalleitung 8a ein Betriebssignal oder ein Warnsignal, das den Status der Überwachung der Öl- und Luftschmiereinrichtung 1 repräsentiert.

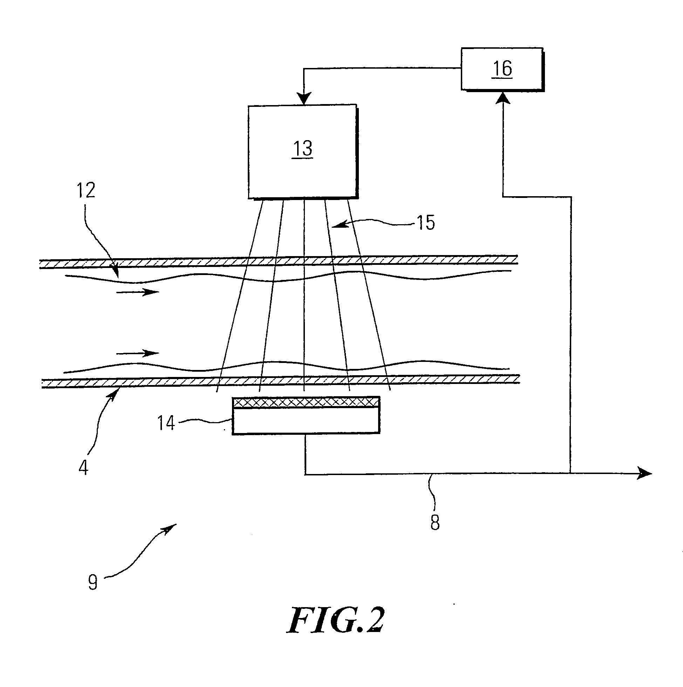

In Fig. 2 ist die erfindungsgemäße Sensoreinheit 9 beispielhaft dargestellt. Um die Zuführleitung 4 herum, in der sich die Schlieren 12 bewegen, ist eine Lichtquelle 13 und ein Schlierensensor 14 angeordnet. Die Darstellung ist nur beispielhaft, es ist z.B. ebenfalls möglich, dass die Lichtquelle 13 ein Teil des Schlierensensors 14 ist und der Schlierensensor reflektiertes Licht erfasst. Die Zuführleitung 4 ist im Bereich der Sensoreinheit 9 transparent ausgeführt und kann beispielsweise ein Glasrohr sein. Die Lichtquelle 13 erzeugt ein in seiner Intensität konstanten Lichtstrahl 15, der durch die Zuführleitung 4 hindurch in Richtung des Schlierensensors 14 strahlt. Lichtquelle 13 und Schlierensensor 14 sind diametral, auf beiden Seiten der Zuführleitung 4 angeordnet. Der Lichtstrahl 15 wird in seiner Intensität durch die transparente Zuführleitung 4 und die Schlieren 12 verändert, wenn er durch sie hindurchdringt. Die transparente Zuführleitung 4 stellt hierbei eine konstante Intensitätsänderung dar. Jedoch schwankt die durch die Schlieren 12 bewirkte Intensitätsänderung des Lichtstrahls mit der zeitlichen Änderung der Schlieren. Damit ist der Lichtstrahl 15, nachdem er durch die Zuführleitung 4 und die Schlieren 12 gedrungen ist, und auf den Schlierensensor 14 trifft, für die Schlieren 12 repräsentativ. Der Schlierensensor 14, der in der beispielhaft dargestellten Ausführungsform ein Lichtempfänger ist, erzeugt ein für die Schlieren 12 repräsentatives Schlierensignal, das an die Auswerteeinheit 10 weitergeleitet wird.

Während einer Kalibrierung wird die Lichtintensität der Lichtquelle 13 durch einen Regler 16 so eingestellt, dass die Lichtintensität, die auf den Schlierensensor 14 trifft, in einem vorbestimmten Bereich des Schlierensensors 14 liegt. Des Weiteren kann während der Kalibrierung mit Hilfe des Reglers 16 eine definiert schwankende Lichtintensität am Schlierensensor 14 erzeugt werden, um die Funktion und das Ergebnis der nachgeschaltete Auswerteeinheit 10 zu testen.

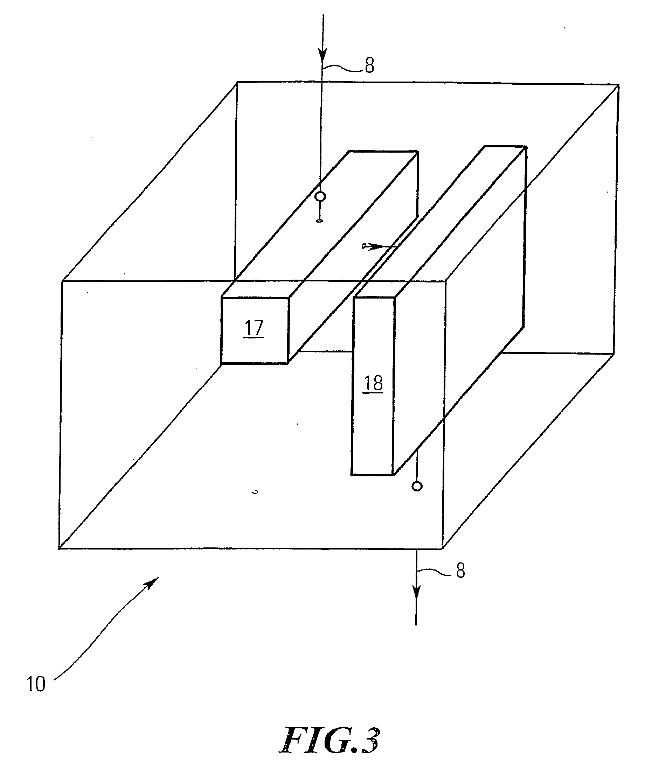

Fig. 3 zeigt ein Ausführungsbeispiel der in Fig. 1 dargestellten Auswerteeinheit 10. Diese besteht aus einer Signalaufbereitungseinheit 17 und einer Signalausgabeeinheit 18.

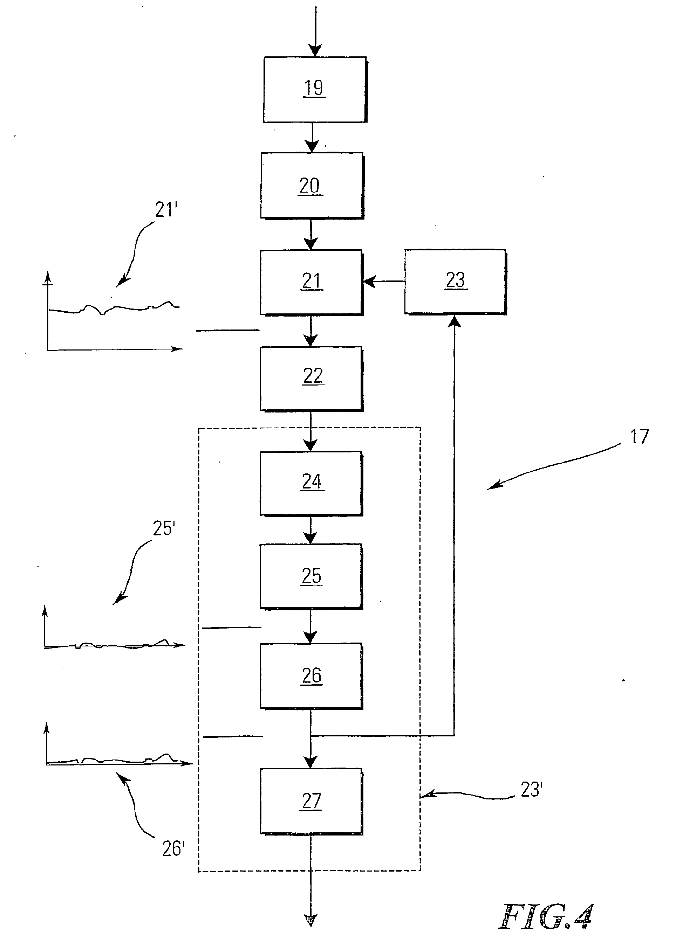

Fig. 4 zeigt schematisch den beispielhaften Aufbau der erfindungsgemäßen Signalaufbereitungseinheit 17, mit der das in der Sensoreinheit 9 erzeugte Schlierensignal aufbereitet wird.

Die Signalaufbereitungseinheit 17 kann einen Vorverstärker 19 aufweisen, durch den das Schlierensignal mit einem vorbestimmten Vorverstärkungsfaktor verstärkt wird. Das Schlierensignal wird dann an einen Filter 20 weitergeleitet, der bestimmte Frequenzbereiche des Schlierensignals herausfiltert, die für die Schlieren 12 nicht repräsentativ sind. Beispielsweise kann hier ein Tiefpassfilter eingesetzt werden, der nur Signale unterhalb einer vorbestimmten Frequenz durchlässt.

Das gefilterte Schlierensignal wird dann an einen Hauptverstärker 21 weitergeleitet. Der Hauptverstärker 21 hat einen variabel einstellbaren Hauptverstärkungsfaktor, durch den das rohe Schlierensignal auf einen vorbestimmten Rohsignalwert verstärkt werden kann. Dieser vorbestimmte Rohsignalwert richtet sich in der beispielhaften Ausführungsform nach einem mittleren Eingangsbereich eines Analog-Digital-Umsetzers 22, zu dem das Schlierensignal als nächstes gelangt. Der Analog-Digital-Umsetzer 22 digitalisiert das analoge Schlierensignal. Um das Schlierensignal durch den Hauptverstärker 21 immer auf einen für den Eingangspegel des Analog-Digital-Umsetzers 22 vorbestimmten Rohsignalwert zu verstärken, verändert ein Rohsignalwertregler 23 den variablen Hauptverstärkungsfaktor des Hauptverstärkers 21. In einem ersten Schlierensignaldiagramm 21' ist das Schlierensignal nach dem Verstärken durch den Hauptverstärker 21 beispielhaft dargestellt. Der Analog-Digital-Umsetzer 22 tastet das rohe Schlierensignal mit einer vorbestimmten Frequenz ab und gibt bei jeder Abtastung einen Digitalwert aus.

Im Folgenden werden verschiedene Einheiten zur Durchführung einer Vorkonditionierung des Schlierensignals in einer Vorkonditionierungsbaugruppe 23' beispielhaft beschrieben:

Das Schlierensignal wird zu einer ersten Vorkonditionierungseinheit 24 weitergeleitet, die einen Mittelwert über ein vorbestimmtes Zeitintervall berechnet.

Das Schlierensignal wird dann an eine zweite Vorkonditionierungseinheit 25 weitergeleitet. Diese hat die Aufgabe, den Gleichanteil aus dem Schlierensignal zu entfernen. Dafür wird ein Mittelwert über ein vorbestimmtes Zeitintervall berechnet und das Ergebnis von dem Schlierensignal subtrahiert. Durch diese zweite Vorkonditionierungseinheit 25 wird das Schlierensignal derart verändert, dass ein Offsetausgleich stattfindet. Ein zweites Schlierensignaldiagramm 25' zeigt beispielhaft das Schlierensignal nach der zweiten Vorkonditionierungseinheit 25.

Das Schlierensignal wird zu einer dritten Vorkonditionierungseinheit weitergeleitet, die ein Gleichrichter 26 ist. Dieser Gleichrichter 26 wandelt negative Schlierensignale in ihre positiven Äquivalente um, wodurch ein durchweg positives Schlierensignal entsteht. Ein drittes Schlierensignaldiagramm 26' zeigt das Schlierensignal beispielhaft nach dem Gleichrichter 26. Das gleichgerichtete Schlierensignal gelangt als nächstes zu einer vierten Vorkonditionierungseinheit, die ein Kompensator 27 ist. Dieser Kompensator 27 teilt das vorkonditionierte Schlierensignal durch den Hauptverstärkungsfaktor, mit dem das rohe Schlierensignal in dem Hauptverstärker 21 verstärkt wurde. Hierdurch wird die im Hauptverstärker 21 durchgeführte Verstärkung kompensiert.

Das vorkonditionierte Schlierensignal wird zur Signalausgabeeinheit 18 weitergeleitet, womit die Vorkonditionierung des Schlierensignals abgeschlossen ist.

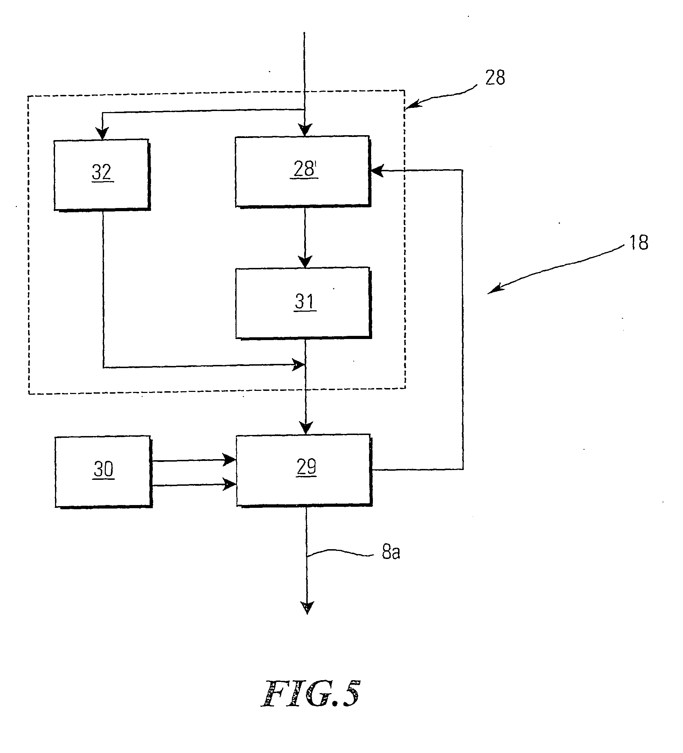

Die in Fig. 5 beispielhaft dargestellte Signalausgabeeinheit 18 enthält eine Glättungseinheit 28, zu der das vorkonditionierte Schlierensignal als erstes gelangt. Die Glättungseinheit 28 berechnet in einer Berechnungseinheit 28' einen Schlierensignalmittelwert über ein vorbestimmtes Mittelungsintervall und glättet das Schlierensignal hierdurch. Hierbei besteht die Möglichkeit das Mittelungsintervall von einem Langzeitintervall auf ein Kurzzeitintervall zu verkleinern. Ob mit dem Lang- oder Kurzzeitintervall gerechnet wird, wird von einer Signalbewertungseinheit 29 bestimmt. Die Signalbewertungseinheit 29 gibt ein Betriebs- oder Warnsignal über die Signalleitung 8a heraus, das die Steuereinheit 7 über den Status der Überwachung der Öl- und Luftschmiereinrichtung informiert. Bei Ausgabe des Warnsignals wird in der Berechnungseinheit 28' der Glättungseinheit 28 das Mittelungsintervall zu dem Kurzzeitintervall verkleinert. In der Signalbewertungseinheit 29 wird das geglättete Schlierensignal bewertet. Das geglättete Schlierensignal wird hierfür mit einem vorbestimmten Betriebsgrenzwert verglichen, der für einen zur betriebsgerechten Schmierung der Schmierstelle ausreichenden Ölfilm repräsentativ ist. Liegt das geglättete Schlierensignal über diesem Betriebsgrenzwert, wird das Betriebssignal ausgegeben.

Des Weiteren wird das geglättete Schlierensignal in der Signalbewertungseinheit 29 mit einem Warngrenzwert verglichen, der für einen nicht zur betriebsgerechten Schmierung der Schmierstelle ausreichenden Ölfilm repräsentativ ist. Sinkt das geglättete Schlierensignal unter diesen Warngrenzwert, so wird das Warnsignal ausgegeben. Bewegt sich das geglättete Schlierensignal zwischen Betriebs- und Warngrenzwert, so wird das Betriebs- bzw. Warnsignal nicht verändert und das zuletzt ausgegebene Signal steht weiterhin an.

Mit der Signalbewertungseinheit 29 verbunden ist eine Speichereinheit 30, aus der der Betriebs- und Warngrenzwert von der Signalbewertungseinheit 29 ausgelesen werden kann. Zum Festlegen beispielsweise des Betriebsgrenzwertes wird ein zur betriebsgerechten Schmierung der Schmierstelle 2 ausreichender Ölfilm eingestellt. Durch Betätigen einer bestimmten Tastenkombination an einer Tastatur der Steuereinheit 7 wird ein Normierungssignal erzeugt. Liegt das Normierungssignal an der Speichereinheit 30 an, wird das zu diesem Zeitpunkt anstehende Schlierensignal beispielsweise als Betriebsgrenzwert in der Speichereinheit 30 festgelegt. Der Warngrenzwert kann als prozentuale oder absolute Abweichung zu dem Betriebsgrenzwert an der Speichereinheit 30 eingegeben werden.

Des Weiteren enthält die Glättungseinheit 28 einen Temperaturkompensator 31. Dieser Temperaturkompensator 31 kompensiert Temperatureinflüsse auf das Öl des Ölfilms. Hierzu wird die aktuelle Ölfilmtemperatur, durch eine angeschlossene Temperaturerfassungseinheit (nicht dargestellt), z.B. ein Widerstandsthermometer, gemessen. Bei einer Abweichung der aktuellen Ölfilmtemperatur zu einer abgespeicherten Ölfilmtemperatur während der Festlegung der Grenzwerte in der Speichereinheit 30 erfolgt eine Änderung des Schlierensignals während des Glättens durch Addieren oder Subtrahieren von vorbestimmten temperaturabhängigen Kennwerten.

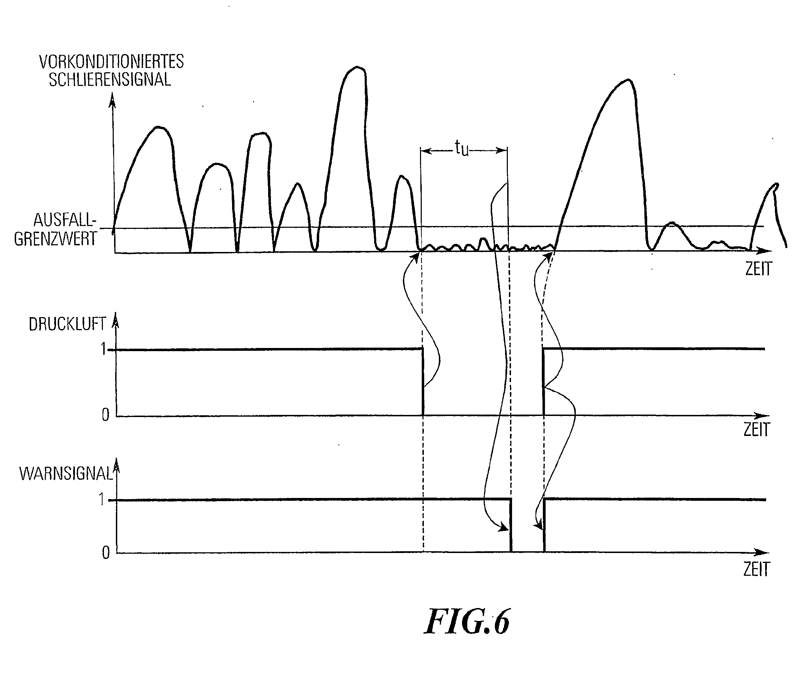

Zusätzlich enthält die Glättungseinheit 28 eine Druckluftüberwachungseinheit 32, mit der anhand des vorkonditionierten Schlierensignals ein ausreichender Luftstrom innerhalb der Zuführleitung 4 überprüft wird. Hierzu wird das vorkonditionierte Schlierensignal in der Druckluftüberwachungseinheit 32 mit einem vorbestimmten Ausfallgrenzwert verglichen. Bei einem Unterschreiten des Ausfallgrenzwertes über einen vorbestimmten Zeitraum tᵤ wird in der Signalbewertungseinheit 29 das Warnsignal ausgegeben. Die Signalverläufe bei einem Ausfall der Druckluft sind beispielhaft in Fig. 6 dargestellt.

## Patentansprüche

1. Verfahren zum Überwachen einer Öl- und Luftschmiereinrichtung (1), mit der ein Ölfilm unter Schlierenbildung durch einen Luftstrom entlang einer Wandung einer Zuführleitung (4) zu einer Schmierstelle (2) förderbar ist, umfassend folgende Verfahrensschritte:
Erfassen der zeitlichen Änderung der Schlieren (12) durch einen Schlierensensor (14),
- Erzeugen eines für die zeitliche Änderung der Schlieren (12) repräsentativen Schlierensignals,
**gekennzeichnet durch** folgende Verfahrensschritte:
- Glätten des Schlierensignals **durch** Berechnung eines Schlierensignalmittelwertes über ein vorbestimmtes Mittelungsintervall,
- Festlegen des geglätteten Schlierensignals als ein Betriebs- und/oder Warngrenzwert, der für einen zur betriebsgerechten Schmierung der Schmierstelle ausreichenden oder nicht ausreichenden Ölfilm repräsentativ ist, in Abhängigkeit von einem Normierungssignal bei Anliegen des Normierungssignals.

2. Verfahren nach Anspruch 1, **gekennzeichnet durch** folgende Verfahrensschritte:
- Vergleichen des geglätteten Schlierensignals mit dem vorbestimmten Betriebsgrenzwert,
- Ausgeben eines Betriebssignals bei Überschreiten des Betriebsgrenzwertes durch das geglättete Schlierensignal.

3. Verfahren nach Anspruch 1 oder 2, **gekennzeichnet durch** folgenden Verfahrensschritt:
- Ausgeben eines Warnsignals bei Unterschreiten des Betriebsgrenzwertes durch das geglättete Schlierensignal.

4. Verfahren nach einem der oben genannten Ansprüche, **gekennzeichnet durch** folgende Verfahrensschritte:
- Vergleichen des geglätteten Schlierensignals mit dem vorbestimmten Warngrenzwert, der für einen zur betriebsgerechten Schmierung der Schmierstelle nicht ausreichenden Ölfilm repräsentativ ist,
- Ausgeben des Warnsignals bei Unterschreiten des Warngrenzwertes **durch** das geglättete Schlierensignal.

5. Verfahren nach einem der oben genannten Ansprüche, **gekennzeichnet durch** folgenden Verfahrensschritt:
- Auslesen des Betriebs- und/oder Warngrenzwertes aus einer Speichereinheit (30).

6. Verfahren nach einem der oben genannten Ansprüche, **gekennzeichnet durch** folgenden Verfahrensschritt:
- Festlegen des Betriebs- oder Warngrenzwertes als prozentuale oder absolute Abweichung des jeweils anderen Grenzwertes.

7. Verfahren nach einem der oben genannten Ansprüche, **gekennzeichnet durch** folgende Verfahrensschritte:
- Automatisches Verkleinern des Mittellungsintervalls bei Ausgabe des Warnsignals,
- Festlegen eines Lang- und eines Kurzzeitintervalls.

8. Verfahren nach einem der oben genannten Ansprüche, **gekennzeichnet durch** folgenden Verfahrensschritt:
- Erzeugen des für die zeitliche Änderung der Schlieren (12) repräsentativen Schlierensignals auf optoelektronischem Wege.

9. Verfahren nach einem der oben genannten Ansprüche, **gekennzeichnet durch** folgende Verfahrensschritte:
- Messen der Temperatur des Ölfilms,
- Speichern der Temperatur des Ölfilms bei der Festlegung des Betriebs- oder Warngrenzwertes,
- Glättung des Schlierensignals in Abhängigkeit von einer Temperaturdifferenz zwischen der gespeicherten und der gemessenen Temperatur des Ölfilms.

10. Verfahren nach Anspruch 9, **gekennzeichnet durch** folgenden Verfahrensschritt:
- Addieren und Subtrahieren von temperaturabhängigen Kennwerten zum oder vom Schlierensignal während des Glättens.

11. Verfahren nach einem der oben genannten Ansprüche 3 bis 10, **gekennzeichnet durch** folgende Verfahrensschritte:
- Vergleichen des ungeglätteten Schlierensignals mit einem vorbestimmten Ausfallgrenzwert, der für ein Schlierensignal bei einem Ausfall des Luftstroms repräsentativ ist, während des Glättens,
- Ausgeben des Warnsignals bei Unterschreiten des Ausfallgrenzwertes **durch** das ungeglättete Schlierensignal.

12. Verfahren nach einem der oben genannten Ansprüche, **gekennzeichnet durch** folgenden Verfahrensschritt:
- Vorkonditionieren des Schlierensignals vor dem Glätten **durch** Berechnen eines Mittelwertes des ungeglätteten Schlierensignals über ein vorbestimmtes Zeitintervall.

13. Verfahren nach einem der oben genannten Ansprüche, **gekennzeichnet durch** folgenden Verfahrensschritt:
- Vorkonditionieren des Schlierensignals vor dem Glätten **durch** Entfernen des Gleichanteils aus dem ungeglätteten Schlierensignal.

14. Verfahren nach einem der oben genannten Ansprüche, **gekennzeichnet durch** folgenden Verfahrensschritt:
- Vorkonditionieren des Schlierensignals vor dem Glätten **durch** Gleichrichten des ungeglätteten Schlierensignals.

15. Verfahren nach einem der oben genannten Ansprüche, **gekennzeichnet durch** folgenden Verfahrensschritt:
- Verstärken des Schlierensignals in Abhängigkeit von dem vorkonditionierten Schlierensignal auf einen vorbestimmten mittleren Rohsignalwert.

16. Verfahren nach Anspruch 15, **gekennzeichnet durch** folgenden Verfahrensschritt:
- Kompensieren der Verstärkung des Rohsignalwerts **durch** Dämpfen des vorkonditionierten Schlierensignals.

17. Verfahren nach einem der oben genannten Ansprüche, **gekennzeichnet durch** folgende Verfahrensschritte:
- Erfassen eines **durch** die Schlieren gerichteten Lichtstrahles,
- Erzeugen des Schlierensignals in Abhängigkeit des Lichtstrahles.

18. Verfahren nach einem der oben genannten Ansprüche, **gekennzeichnet durch** folgenden Verfahrensschritt:
- Erzeugen des **durch** die Schlieren gerichteten Lichtstrahles (15) mit einer Lichtquelle (13).

19. Verfahren nach Anspruch 16, **gekennzeichnet durch** folgenden Verfahrensschritt:
- Kalibrieren des Schlierensignals **durch** Regeln der Lichtintensität der Lichtquelle (15).

20. Verfahren nach Anspruch 16, **gekennzeichnet durch** folgenden Verfahrensschritt:
- Kalibrieren des Schlierensignals **durch** Regeln der Lichtintensität der Lichtquelle (15) auf eine vorbestimmte Prüfintensität.

21. Verfahren nach einem der oben genannten Ansprüche, **gekennzeichnet durch** folgenden Verfahrensschritt:
- Filtern des rohen Schlierensignals **durch** einen Filter (20).

22. Überwachungsvorrichtung für eine Öl- und Luftschmiereinrichtung, wobei durch die Öl- und Luftschmiereinrichtung ein Ölfilm unter Schlierenbildung durch einen Luftstrom entlang einer Wandung einer Zuführleitung (4) zu einer Schmierstelle (2) förderbar ist, und die Überwachungsvorrichtung mit einem Schlierensensor (14) versehen ist, mit dem die zeitliche Änderung der Schlieren (12) erfassbar und ein für die zeitliche Änderung der Schlieren (12) repräsentatives Schlierensignal erzeugbar ist, **gekennzeichnet durch** eine Glättungseinheit (28), **durch** die das Schlierensignal glättbar und ein Schlierensignalmittelwert über ein vorbestimmtes Mittelungsintervall berechenbar ist und **durch** eine Speichereinheit (30), aus der im Betrieb ein Betriebsund/oder Warngrenzwert auslesbar ist, der beim Anliegen eines Normierungssignals veränderbar abspeicherbar ist.

## Claims

1. Method for monitoring an oil and air lubricating device (1), with which an oil film, while forming striae, can be conveyed by an airflow along a wall of a supply line (4) to a lubrication point (2), comprising the following process steps:
- detecting the temporal change in the striae (12) using a striae sensor (14);
- generating a striae signal that is representative of the temporal change in the striae (12); **characterised by** the following process steps:
- smoothening the striae signal by calculating an average value of the striae signal over a predetermined averaging interval,
- specifying the smoothened striae signal as an operating and/or warning limit, which is representative of an oil film that is sufficient or insufficient for lubrication point lubrication appropriate for operation, depending on a normalisation signal when the normalisation signal is applied.

2. Method according to claim 1, **characterised by** the following process steps:
- comparing the smoothened striae signal with the predetermined operating limit,
- outputting an operating signal if the smoothened striae signal exceeds the operating limit.

3. Method according to claim 1 or 2, **characterised by** the following process step:
- outputting a warning signal if the smoothened striae signal falls below the operating limit.

4. Method according to any one of the preceding claims, **characterised by** the following process steps:
- comparing the smoothened striae signal with the predetermined warning limit, which is representative of an oil film that is not sufficient for lubrication point lubrication appropriate for operation,
- outputting the warning signal if the smoothened striae signal falls below the warning limit.

5. Method according to any one of the preceding claims, **characterised by** the following process step:
- reading out the operating and/or warning limit from a memory unit (30).

6. Method according to any one of the preceding claims, **characterised by** the following process step:
- specifying the operating or warning limit as a percentage or absolute deviation of the respective other limit.

7. Method according to any one of the preceding claims, **characterised by** the following process steps:
- automatic shortening of the averaging interval when the warning signal is being output;
- specifying a long time interval and a short time interval.

8. Method according to any one of the preceding claims, **characterised by** the following process step:
- generating the striae signal representative of the temporal change in the striae (12) in an opto-electronic way.

9. Method according to any one of the preceding claims, **characterised by** the following process steps:
- measuring the temperature of the oil film,
- saving the temperature of the oil film when specifying the operating or warning limit,
- smoothening the striae signal depending on the difference in the temperatures of the saved and measured temperature of the oil film.

10. Method according to claim 9, **characterised by** the following process step:
- adding and subtracting temperature-dependent characteristic values to or from the striae signal during the smoothening.

11. Method according to any one of claims 3 to 10, **characterised by** the following process steps:
- comparing the unsmoothened striae signal with a predetermined malfunction limit that is representative of a striae signal when there is a malfunction in the airflow, during the smoothening,
- outputting the warning signal if the unsmoothened striae signal falls below the malfunction limit.

12. Method according to any one of the preceding claims, **characterised by** the following process step:
- preconditioning the striae signal before the smoothening by calculating an average value of the unsmoothened striae signal over a predetermined time interval.

13. Method according to any one of the preceding claims, **characterised by** the following process step:
- preconditioning the striae signal before the smoothening by removing the constant portion from the unsmoothened striae signal.

14. Method according to any one of the preceding claims, **characterised by** the following process step:
- preconditioning the striae signal before the smoothening by rectifying the unsmoothened striae signal.

15. Method according to any one of the preceding claims, **characterised by** the following process step:
- amplifying the striae signal, depending on the preconditioned striae signal, to a predetermined average raw signal value.

16. Method according to claim 15, **characterised by** the following process step:
- compensating the amplification of the raw signal value by attenuating the preconditioned striae signal.

17. Method according to any one of the preceding claims, **characterised by** the following process steps:
- detecting a beam of light directed through the striae;
- generating the striae signal depending on the beam of light.

18. Method according to any one of the preceding claims, **characterised by** the following process step:
- generating the beam of light (15) directed through the striae by means of a light source (13).

19. Method according to claim 16, **characterised by** the following process step:
- calibrating the striae signal by regulating the light intensity of the light source (15).

20. Method according to claim 16, **characterised by** the following process step:
- calibrating the striae signal by regulating the light intensity of the light source (15) to a predetermined test intensity.

21. Method according to any one of the preceding claims, **characterised by** the following process step:
- filtering the raw striae signal through a filter (20).

22. Monitoring device for an oil and air lubricating device, wherein, by means of the oil and air lubricating device, an oil film, while forming striae, is conveyed by an airflow along a wall of a supply line (4) to a lubrication point (2), and the monitoring device is provided with a striae sensor (14), with which the temporal change in the striae (12) can be detected and a striae signal can be generated that is representative of the temporal change in the striae (12), **characterised by** a smoothening unit (28), by means of which the striae signal can be smoothened and an average value of the striae signal over a predetermined averaging interval can be calculated, and by a memory unit (30), from which an operating and/or warning limit can be read during operation, which limit can be alterably stored when the normalisation signal is applied.

## Revendications

1. Procédé de surveillance d'un dispositif (1) de lubrification à l'huile et par air à l'aide duquel un film d'huile est apte à être amené à un point de lubrification (2) en formant des traînées à travers un écoulement d'air le long d'une paroi d'une conduite d'amenée (4), comprenant les étapes qui consistent :
- à détecter la variation dans le temps des traînées (12) grâce à un capteur de traînées (14),
- à produire un signal de traînée représentatif de la variation dans le temps des traînées (12),
**caractérisé par** les étapes qui consistent :
- à lisser le signal de traînées grâce au calcul d'une valeur moyenne de signal de traînées sur un intervalle de moyenne prédéfini,
- à fixer le signal de traînées lissé comme valeur limite de fonctionnement et/ou d'avertissement qui est représentative d'un film d'huile suffisant ou insuffisant pour la bonne lubrification du point de lubrification, en fonction d'un signal de normalisation dans le cas de l'application du signal de normalisation.

2. Procédé selon la revendication 1, **caractérisé par** les étapes qui consistent :
- à comparer le signal de traînées lissé à la valeur limite de fonctionnement prédéfinie,
- à émettre un signal de fonctionnement si le signal de traînées lissé dépasse la valeur limite de fonctionnement.

3. Procédé selon la revendication 1 ou 2, **caractérisé par** l'étape qui consiste :
- à émettre un signal d'avertissement si le signal de traînées lissé est inférieur à la valeur limite de fonctionnement.

4. Procédé selon l'une des revendications précédentes, **caractérisé par** les étapes qui consistent :
- à comparer le signal de traînées lissé à la valeur limite d'avertissement prédéfinie qui est représentative d'un film d'huile insuffisant pour la bonne lubrification du point de lubrification,
- à émettre le signal d'avertissement si le signal de traînées lissé est inférieur à la valeur limite d'avertissement.

5. Procédé selon l'une des revendications précédentes, **caractérisé par** l'étape qui consiste :
- à extraire la valeur limite de fonctionnement et/ou d'avertissement d'une unité de mémoire (30).

6. Procédé selon l'une des revendications précédentes, **caractérisé par** les étapes qui consistent :
- à fixer la valeur limite de fonctionnement ou d'avertissement comme écart en pourcentage ou absolu de l'autre valeur limite.

7. Procédé selon l'une des revendications précédentes, **caractérisé par** les étapes qui consistent :
- à réduire automatiquement l'intervalle de moyenne lors de l'émission du signal d'avertissement,
- à fixer un intervalle long et un intervalle court.

8. Procédé selon l'une des revendications précédentes, **caractérisé par** l'étape qui consiste :
- à produire par voie optoélectronique le signal de traînées représentatif de la variation temporelle des traînées (12).

9. Procédé selon l'une des revendications précédentes, **caractérisé par** les étapes qui consistent :
- à mesurer la température du film d'huile,
- à mettre en mémoire la température du film d'huile lors de la fixation de la température limite de fonctionnement ou d'avertissement,
- à lisser le signal de traînées en fonction d'une différence de température entre la température mise en mémoire et la température mesurée du film d'huile.

10. Procédé selon la revendication 9, **caractérisé par** l'étape qui consiste :
- à ajouter au signal de traînées ou à soustraire de celui-ci, pendant le lissage, des valeurs caractéristiques qui sont fonction de la température.

11. Procédé selon l'une des revendications 3 à 10 précédentes, **caractérisé par** les étapes qui consistent :
- à comparer le signal de traînées non lissé à une valeur limite de défaillance prédéfinie qui est représentative d'un signal de traînées en cas de défaillance de l'écoulement d'air, pendant le lissage,
- à émettre le signal d'avertissement si le signal de traînées non lissé est inférieur à la valeur limite de défaillance.

12. Procédé selon l'une des revendications précédentes, **caractérisé par** l'étape qui consiste :
- à préconditionner le signal de traînées, avant le lissage, en calculant une valeur moyenne du signal de traînées non lissé, sur un laps de temps prédéfini.

13. Procédé selon l'une des revendications précédentes, **caractérisé par** l'étape qui consiste :
- à préconditionner le signal de traînées, avant le lissage, en supprimant du signal de traînées non lissé la composante continue.

14. Procédé selon l'une des revendications précédentes, **caractérisé par** l'étape qui consiste :
- à préconditionner le signal de traînées, avant le lissage, en redressant le signal de traînées non lissé.

15. Procédé selon l'une des revendications précédentes, **caractérisé par** l'étape qui consiste :
- à amplifier le signal de traînées en fonction du signal de traînées préconditionné, jusqu'à une valeur de signal brute moyenne prédéfinie.

16. Procédé selon la revendication 15, **caractérisé par** l'étape qui consiste :
- à compenser l'amplification de la valeur de signal brute en atténuant le signal de traînées préconditionné.

17. Procédé selon l'une des revendications précédentes, **caractérisé par** les étapes qui consistent :
- à détecter un rayon lumineux qui traverse les traînées,
- à produire le signal de traînées en fonction du rayon lumineux.

18. Procédé selon l'une des revendications précédentes, **caractérisé par** l'étape qui consiste :
- à produire le rayon lumineux (15) dirigé à travers les traînées, à l'aide d'une source lumineuse (13).

19. Procédé selon la revendication 16, **caractérisé par** l'étape qui consiste :
- à étalonner le signal de traînées en réglant l'intensité lumineuse de la source lumineuse (13).

20. Procédé selon la revendication 16, **caractérisé par** l'étape qui consiste :
- à étalonner le signal de traînées en réglant l'intensité lumineuse de la source lumineuse (13) à une intensité de contrôle prédéfinie.

21. Procédé selon l'une des revendications précédentes, **caractérisé par** l'étape qui consiste :
- à filtrer le signal de traînées brut à l'aide d'un filtre (20).

22. Dispositif de surveillance pour un dispositif de lubrification à l'huile et par air, étant précisé que grâce au dispositif de lubrification à l'huile et par air, un film d'huile est apte à être amené à un point de lubrification (2) en formant des traînées à travers un écoulement d'air le long d'une paroi d'une conduite d'amenée (4), et que le dispositif de surveillance est pourvu d'un capteur de traînées (14) à l'aide duquel la variation dans le temps des traînées (12) peut être détectée et un signal de traînées représentatif de ladite variation dans le temps des traînées (12) est apte à être produit, **caractérisé par** une unité de lissage (28) grâce à laquelle le signal de traînées est apte à être lissé et une valeur moyenne de signal de traînées est apte à être calculée sur un intervalle de moyenne prédéfini, et par une unité de mémoire (30) dans laquelle peuvent être extraites, en fonctionnement, une valeur de fonctionnement et/ou une valeur d'avertissement qui sont aptes à être mises en mémoire de manière variable lors de l'application d'un signal de normalisation.
